Europäisches Patentamt

European Patent Office

Office européen des brevets

(19)

(11) Publication number: **0 264 340 B1**

(12) **EUROPEAN PATENT SPECIFICATION**

(45) Date of publication of patent specification: **08.05.91** (51) Int. Cl.⁵: **F16K 5/10**, F16K 5/04

(21) Application number: **87630143.3**

(22) Date of filing: **11.08.87**

---

(54) Valve having a rotatable cage.

---

(30) Priority: **14.10.86 US 918283**

(43) Date of publication of application:
**20.04.88 Bulletin 88/16**

(45) Publication of the grant of the patent:
**08.05.91 Bulletin 91/19**

(84) Designated Contracting States:
**DE FR GB**

(56) References cited:
**DE-A- 1 807 346**
**DE-A- 1 959 617**
**US-A- 2 414 966**
**US-A- 2 769 456**

(73) Proprietor: **XOMOX CORPORATION**
**4444 Cooper Road**
**Cincinnati Ohio 45242(US)**

(72) Inventor: **Hobson, David Jeremy**
**9554 E.Kemper Road**
**Loveland Ohio 45140(US)**
Inventor: **Dejager, Everett John**
**8622 Plainfield Lane**
**Cincinnati Ohio 45036(US)**

(74) Representative: **Weydert, Robert et al**
**OFFICE DENNEMEYER S.à.r.l. P.O. Box 1502**
**L-1015 Luxembourg(LU)**

EP 0 264 340 B1

## Description

The invention relates generally to valves and more particularly to rotatable valves having a cage structure for seal protection during dynamic fluid control applications. The invention will be specially disclosed in connection with an improved plug valve having an independently rotatable cage structure which permits the valve to function efficiently for both throttling and shutoff purposes.

In the design of industrial fluid flow systems, it is standard engineering practice to select different types of valves for shutoff purposes than for dynamic fluid control purposes. Fluid shutoff valves are selected for their tight sealing characteristics so as to minimize fluid leakage. On the other hand, fluid control valves are selected for their ability to precisely control dynamic fluid flow characteristics, such as flow rate or pressure, through the fluid flow system. Unfortunately, the requirements for fluid shutoff and dynamic fluid control are often contradictory. Consequently, improvements in one or the other of the sealing and the dynamic fluid control characteristics is usually made only at the expense of the other. Thus, when both precise control and tight shutoff are needed, two separate valves are usually employed. For example, in a system designed for control of a highly corrosive process media, it is common practice to employ a globe valve for throttling purposes and a plug valve for shutoff purposes. These two different types of valves are structurally dissimilar.

Globe valves used for dynamic fluid flow control purposes, such as throttling, are frequently all metal structures which never fully close in operation. A typical globe valve includes a tapered closure member which is axially moved toward and away from a seating position so as to provide a variable opening in the space between the closure member and the seat. Flow rate and pressure of the controlled process fluid are varied by axial positioning of the closure member with respect to the seat. Although such a valve structure has excellent control capabilities, it does not seal efficiently. Because all of the sealing surfaces are subject to erosion and direct fluid impingement, it is difficult to employ "soft" seat materials, such as plastics, which are necessary to achieve "bubble tight" sealing for long life. Hence, globe valves generally do not use "soft" seats in corrosion fluid applications and do not meet the sealing requirements needed for tight shutoff.

A plug valve, on the other hand, provides excellent shutoff capabilities. A typical plug valve indicates a plug member which is rotatably disposed within a fluid flow passage extending through a valve body. The plug member also contains a through fluid passageway which is brought into and out of registry with the flow passage of valve body as the plug member is rotated. The plug member is normally rotated through a 90 degree range of movement between its fully open and fully closed positions. In order to prevent leakage between the valve body and the plug member, a sealing member in the form of a sleeve is fitted in the body about the plug. The sleeve, which is typically formed of a relatively soft, chemically inert plastic material, such as polytetrafluoroetheline, is aperatured in correspondence to the plug member when the plug member is in the fully open position. Significantly, the sleeve, which forms the seat of the plug valve, is protected from direct process fluid impingement by the plug member whenever the valve is in the fully open or fully closed positions.

It is possible to position the plug member intermediate the fully open and closed positions and to use a conventional plug valve for both shutoff and dynamic fluid control purposes. However, such use has serious limitations and disadvantages. First of all, the plug member is in tight fitting relationship with the sealing sleeve. This results in high friction between the plug and sleeve and places high torque requirements on the actuator used to rotate the plug member. It also follows that the plug member rotates relatively slowly and imprecisely.

Perhaps even more importantly, a plug valve is designed to operate only in fully open or fully closed positions where the sleeve is protected against the fluid flow of the process fluid flowing through the valve. When the plug member is rotated to an intermediate position, the sleeve (or seat) is exposed to direct fluid impingement of the process fluid. Such direct fluid impingement leads to erosion and deterioration of the sleeve and results in diminution of the sleeve sealing performance. Although the sleeve also is exposed to process fluid flow in conventional plug valve operation, such exposure occurs only during the brief transitory period of movement between the fully open and fully closed positions. Erosion is obviously much more pronounced during extended exposure, such as in a throttling application. The erosion problem is particularly acute when the process media is a high pressure slurry containing abrasive particles.

A valve assembly of the type according to the precharacterizing portion of claim 1 is disclosed in DE-A-1 959 617 in which a movable valve plug which has fully open and fully closed positions is also positionable into intermediate positions for throttling operation. There is disposed within the movable valve plug a hollow cylinder which normally remains stationary with respect to the valve body but is adjustable with respect thereto to modifiy the flow characteristics through the valve assembly. On-off and throttling control is effected by the valve plug having the hollow cylinder disposed therein. The sealing member fitted in the valve body about the valve plug is exposed to process fluid flow during throttling operation. This, of course, leads to erosion and deterioration and spoils the tight shutoff sealing capabilities of the valve.

Reference is also made to US-A-2 769 456 which discloses a plug valve having an inner and an outer plug. The outer plug has two flow passages intersecting at substantially right angles. There is disposed a removable orifice member in each passage. The outer plug has always one of the orifice members in the valve fluid flow passageway. The other orifice member can be exchanged and serves as a standby orifice member. The outer valve plug does not serve to control fluid flow through the valve, it is only movable between two open positions. Shutting off fluid flow is provided by the inner valve plug. No sealing means requiring protection are provided in the valve body.

The object of the invention is to provide a rotary valve assembly which is capable of both tight shutoff and dynamic fluid control and provides improved protection of its sealing elements during dynamic fluid flow applications.

In accordance with the invention, to achieve this, there is provided a valve assembly comprising a valve body, said body having an inlet, an outlet, an internal fluid flow passage extending therebetween; a dynamic fluid control member rotatably fitted in said body, said dynamic control member being movable between open and closed positions to selectively control the flow of fluid through said internal flow passage in accordance with the angular position of the dynamic control member relative to said body; and a further control member disposed within said body, said further control member being selectively rotatable with respect to said body independently of said dynamic control member; said dynamic control member and said further control member being rotatable about a common axis; and sealing means providing a seal between the valve body and the assembly consisting of the said control members; characterized in that said further control member is an on-off control member having the dynamic control member disposed therein and being rotatable between a first open position and a second closed position, said on-off control member, in all but the closed position of the dynamic control memrbre, remaining stationary in the first open position to fully cover the sealing means and to protect them from direct impingement of a fluid flowing through said internal fluid flow passage.

In one embodiment, bearing members are located between the dynamic and on-off control member. This provides a low friction fit so that the dynamic control member can be rotated with little torque. The bearing members can be formed of a fluorinated hydrocarbon polymer.

In another embodiment, means are provided for applying a torque to the dynamic control member for effectuating movement thereof. A position control means is also provided indicating the relative angular position of the dynamic control member relative to the body. The position control means is mechanically uncoupled from said torque applying means.

The valve assembly will now be described in greater detail with reference to the accompanying drawings, wherein:

Fig. 1 is an elevational view, partially in cross-section, of a valve assembly constructed in accordance with the principles of the present invention;

Fig. 2 is a schematic representation depicting the relative angular positions between the dynamic control member, the on-off control member and sealing member in the Fig. 1 position of the assembly;

Fig. 3 is a schematic view similar to Fig. 2, but showing the dynamic control member rotated ninety degrees from the fully closed Fig. 2 position to a fully open position;

Fig. 4 is a schematic view similar to Figs. 2 and 3, but showing the dynamic control member rotated to a throttling position intermediate its fully open and fully closed positions; and

Fig. 5 is a schematic view similar to Figs. 2 - 4 depicting both dynamic and on-off control members rotated to their closed position.

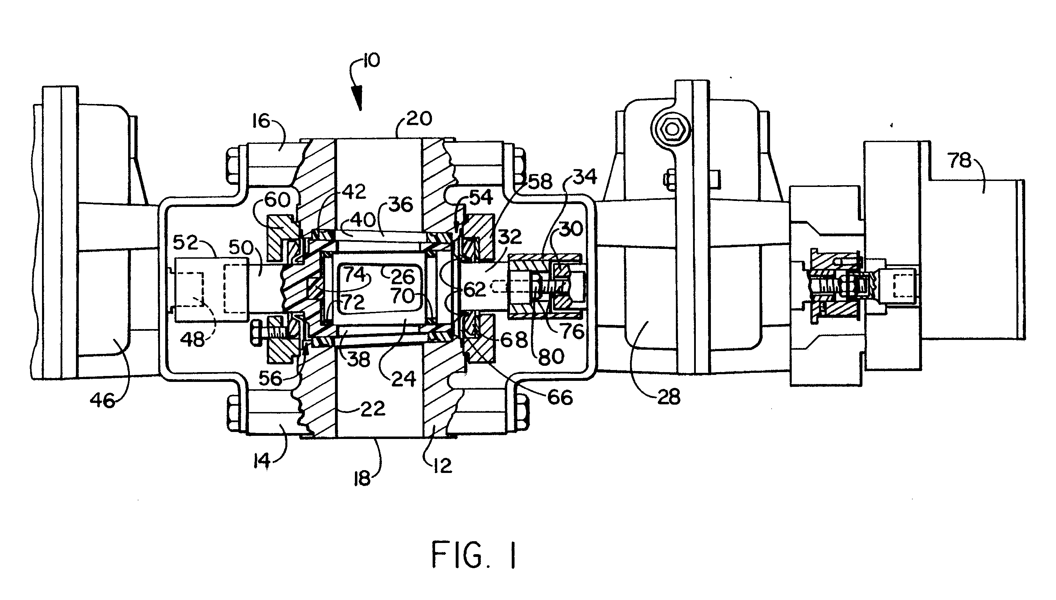

Turning now to the drawings, Fig. 1 shows a rotary valve 10 constructed in accordance with the principles of the present invention. The specifically illustrated valve 10 is a plug valve having a body 12 with flanges 14 and 16 on its opposite ends. The body 12 has a fluid flow inlet 18 and a fluid flow outlet 20 centrally disposed within the flanges 14 and 16, respectively. An internal fluid flow passage 22 extends through the body 12 between the inlet 18 and outlet 20.

Fluid flow through the internal flow passage 22 is controlled and selectively throttled by dynamic closure member 24, specifically illustrated as a rotary cage member. The cage member 24 has a through passageway 26 which is selectively brought into and out of registry with the internal flow passage 22 by rotating the cage member 24 relative to the body 12. Such rotation is effectuated in the illustrated valve by a vane-type actuator 28, which actuator 28 transmits torque through an output shaft 30 coupled to a valve actuating shaft 32 through a coupling 34. The valve actuating shaft 32 is rigidly connected to the cage member 24 to cause the cage member 24 to rotate with the shaft 32.

As those skilled in the art will readily appreciate, the output shaft 30 from the actuator 28 is rotated in response to differential fluid pressure applied to opposite sides of a non-illustrated vane (sometimes called a paddle) located within the vane actuator 28. As shown in the illustration of Fig. 1, the cage member 24 is positioned in its fully closed position. By rotating the cage member 24 ninety degrees, the through passageway 26 of the cage is brought fully into alignment with the internal flow passage 22 to position the cage member 24 in its fully open position.

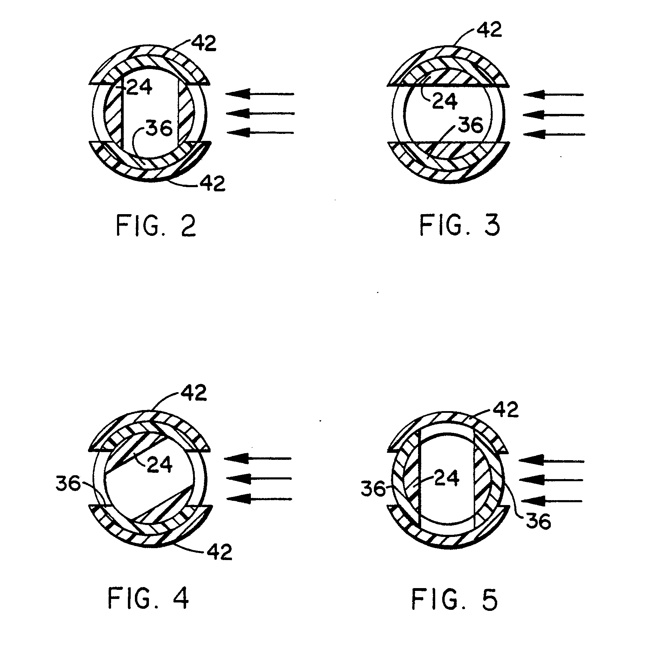

The cage member 24 is rotatably fitted within a plug 36, which plug 36 serves as the primary sealing member for the valve assembly 10. The illustrated form of plug is a generally hollow fruscoconical structure having walls which are apertured in correspondency with the flow passage 22 so as to permit the unobstructed flow of a process fluid through the internal flow passage 22 when the plug 36 is in the position shown in Figs. 1, 2, 3 and 4. However, as the plug 36 is rotated, the apertures, identified in the drawings as apertures 38 and 40, are moved out of alignment with the passageway 22. As readily apparent from the depiction of Fig. 5, the plug 36 is rotatable to a fully closed position to completely stop flow through internal passageway 22. However, for reasons which will become apparent from the following description, the plug typically remains stationary in the positions of Figs. 2 - 4 in all but shutoff operation.

Referring once again to Fig. 1, it will be seen that the plug 36 is fitted within a sleeve 42 which extends across the passageway 22 and provides a seal between the valve body 12 and the plug 36. The apertures of this sleeve 42 also correspond to the passageway 22. In the preferred form of the invention, this sleeve 42 is formed of a fluorinated hydrocarbon material, such as polytetrafluoroethylene, which is chemically inert to virtually every process fluid. However, since such seals may become eroded from direct process media impingement, it is important to protect the sleeve during all operating positions of the valve. From viewing Figs. 2 - 4, it is seen that the illustrated plug fully protects the sleeve in all operating positions of the cage member 24, irrespective of the cage member's angular position. Aside from the seals (and bearing discussed below), all other components of the valve assembly are formed of metal which is resistant to erosion by the process media.

The plug 36 is rotatable within the body about an axis coincident to that of cage member 24. Angular rotation of the plug 36 is effectuated in a manner analogous to that of the cage member 24. A second vane actuator 46, positioned on the opposite side of the valve body 12 with respect to actuator 28, has an output shaft 48 which transmits torque to an actuating shaft 50 for the plug 36 through a coupling 52. The actuating shaft 50 is rigidly connected to the plug 36 so that the plug rotates with the shaft 50. Like the vane actuator 28, vane actuator 46 also rotates in response to a differential fluid pressure across a vane (not shown) rotatably mounted within the actuator 46.

The actuating shafts 32 and 50 for the cage member 24 and plug 36, respectively, extend out opposite sides of the valve body 12 through access openings 54 and 56. Each access opening 54,56 is closed by a valve cover. Valve cover 58 is secured to the valve body 12 and fitted within access opening 54, while valve cover 60 is simultaneously secured and fitted within access opening 56. A diaphragm seal 62 is interposed between the body 12 and cover 58 to prevent leakage of the process fluid through access opening 54. The diaphragm 62, which is preferably formed of a fluorinated hydrocarbon or other material inert to the process media, has a central aperture through which the actuating shaft 32 extends. The shaft 32 is compressingly contacted by the interior wall of a V-shaped groove formed about the periphery of the diaphragm's (62) central aperture. A delta ring 64 supported on a shoulder of the cage member 24 is positioned in the V-shaped groove of the diaphragm 62 to compressingly urge the interior wall of the V-shaped groove in sealing relationship against the shaft 32. A metal diaphragm 66 is placed exteriorily of the diaphragm 62. The diaphragm 66 is larger than the diaphragm 62 and is received in a separate counterbore of the valve body 12 so as to protect the diaphragm 62 from damage when the access cover 58 is tightened.

A thrust collar 68 having an obliquely oriented underside surface is fitted on the metal diaphragm 66 with the obliquely oriented surface in engagement with the outside wall of the V-shaped groove. The thrust collar 68 acts to apply a radially inward sealing pressure against the outside wall of the V-shaped groove, and this sealing pressure is transmitted through the delta ring 62 to provide a sealing pressure against the actuating shaft 32. Thrust is adjustably applied to the thrust collar 68 to vary the sealing pressure about the shaft 32. This is achieved through a series of axially adjustable bolts (not shown) which extend through the cover 58.

A similar adjustable sealing arrangement is provided in the access opening 56 for the plug 36. Since the sealing arrangement for the plug in access opening 56 is virtually identical to that of the cage member 24 in access opening 54, a detailed description of the former sealing arrangement is omitted in the interests of brevity. However, attention is directed to adjusting bolt 68 extending through cover 60 for adjusting the sealing pressure about shaft 50. The illustrated adjusting bolt 68 is one of three such bolts extending through cover 60. Three similar non-illustrated adjusting bolts also extend through cover 58.

The cage member 24 advantageously contacts the plug 36 only about three small bearing surfaces. Two of these bearing surfaces result from bearings 70 and 72 which are circumferentially placed about the cage member 24 on opposite sides of the passageway 26. The remaining bearing is a solid "button-type" bearing 74 separating the respective axial end surfaces of the cage member 24 and plug 36. Like the sleeve 42, the bearings 70, 72 and 74 are preferably formed from fluorinated hydrocarbon polymer, such as polytetrafluoroethylene. Hence, while the plug 36 remains tighly fitted against the sleeve 42 to establish a tight "bubble tight" seal, the cage 24 is rotated in a relatively low friction fit against the cage assembly. As a consequence of this relatively low friction fit, the cage member 24 may be rotated with relatively little torque and to substantially greater accuracy than plugs in conventional plug valves having equivalent sealing capabilities.

In order to further improve the accuracy with which cage member 24 may be rotated, the position control mechanism for the plug member 24 is mechanically decoupled from the torque transmitting elements of the valve. For example, in the illustrated embodiment, the output shaft 30 of vane actuator 28 is hollow. All of the torque is applied from output shaft 30 to the valve actuating shaft 32 through coupling 34. The actuating shaft 32 is also connected to a position control shaft 76 which extends through the output shaft 30 in concentric relationship thereto. The position control shaft extends to a positioner 78 mounted on the vane actuator 28. The positioner 78 of the preferred embodiment is a commercially available positioner which positions the cage member 24 under the control of a feedback control system. In the illustration of Fig. 1, the position control shaft 76 is threadably received in a threaded opening in the outboard axial end of actuating shaft 32. A locknut 80 secures the position control shaft 76 to the actuating shaft 32. Since the position control shaft carries virtually no torque, light-weight securement means between the position control and actuating shafts are satisfactory to provide accurate position control of the cage member 24.

As noted above, the valve assembly is capable of throttling a process media without exposing any portion of the sleeve 42 to direct fluid impingement. By rotating the cage member 24 to an intermediate position and simultaneously positioning the plug 36 to a fully open position, the process media may even be throttled while fully protecting all parts of the sleeve 42 from fluid impingement. It will also be appreciated that the illustrated manner of controlling the cage member 24 and plug 36 eliminates the poorly controlled rotations of prior art designs. Such poorly controlled rotations resulted from high torque requirement and backlash in the devices.

In summary, numerous benefits have been described from employing the concepts of the invention. The valve permits throttling and other dynamic fluid control application with only metal surfaces exposed to the media in a valve capable of "bubble tight" sealing. Moreover, the dynamic control member can be rotated with minimal torque, allowing highly precise, low powered, controlled rotation of that dynamic control member. Furthermore, the on-off control member may be closed independently of the dynamic control member to achieve tight sealing. Hence, a single valve may be used for both throttling and fluid shutoff purposes.

The foregoing description of a preferred embodiment of the invention has been presented for purposes of illustration and description. It is not intended to be exhaustive or to limit the invention to the precise form disclosed. Obvious modifications or variations are possible in light of the above teachings. For example, the principles of the invention are not limited to plug valves. Also, other types of rotary valve and/or actuators may be used.

## Claims

1. A valve assembly, comprising:

a valve body (12), said body having an inlet (18), an outlet (20), an internal fluid flow passage (22) extending therebetween;

a dynamic fluid control member (24) rotatably fitted in said body (12), said dynamic control member (24) being movable between open and closed positions to selectively control the flow of fluid through said internal flow passage (22) in accordance with the angular position of the dynamic control member (24) relative to said body (12); and

a further control member (36) disposed within said body (12), said further control member (36) being selectively rotatable with respect to said body (12) independently of said dynamic control member (24);

said dynamic control member (24) and said further control member (36) being rotatable about a common axis;

and sealing means (42) providing a seal between the valve body (12) and the assembly consisting of said control members (24, 36);

characterized in that said further control member (36) is an on-off control member (36) having the dynamic control member (24) disposed therein and being rotatable between a first open position and a second closed position, said on-off control member (36), in all but the closed position of the dynamic control member (24), remaining stationary in the first open position to fully cover the sealing means (42) and to protect them from direct impingement of a fluid flowing through said internal fluid flow passage (22).

2. A valve assembly according to claim 1, characterized by including bearing members (70, 72, 74) located between said dynamic and on-off control members (24, 36).

3. A valve assembly according to claim 2, characterized in that said sealing means (42) and said bearing members (70, 72, 74) are formed of a fluorinated hydrocarbon polymer.

4. A valve assembly according to claim 1, characterized in that said on-off control member (36) is a rotary plug member.

5. A valve assembly according to claim 1, characterized by including means (28) for applying a torque to said dynamic control member (24) for effectuating movement thereof, and further including a position control means (76, 78) for indicating the relative angular position of the dynamic control member (24) relative to said body (12), said position control means (76, 78) being mechanically uncoupled from said torque applying means (28).

6. A valve assembly according to claim 5, characterized by including means (46) for applying a torque to said on-off control member (36) for effectuating rotation thereof, said torque applying means (46) for said on-off control member (36) being positioned on the opposite side of the internal fluid flow passage (22) with respect to the torque applying means (28) for said dynamic control member (24).

7. A valve assembly according to claim 6, characterized in that said torque applying means (28) for said dynamic control member (24) and said torque applying means (46) for said on-off control member (36) each include a rotatable actuating shaft (32, 50) extending through an access opening (54, 56) in said valve body (12) and adjustable means for independently sealing the access opening (54, 56) about said shafts (32, 50).

## Revendications

1. Un ensemble de valve, comprenant:
   un corps de valve (12), ledit corps comportant une entrée (18), une sortie (20), un passage interne d'écoulement de fluide (22) s'étendant entre eux;
   un élément (24) de commande dynamique de fluide monté à rotation dans ledit corps (12), ledit élément de commande dynamique (24) étant mobile entre des positions ouverte et fermée pour commander sélectivement l'écoulement du fluide à travers ledit passage interne de fluide (22) selon la position angulaire de l'élément (24) de commande dynamique par rapport audit corps (12) ; et
   un autre élément de commande (36) disposé à l'intérieur dudit corps (12), ledit autre élément de commande (36) étant mobile à rotation de façon sélective par rapport audit corps (12) indépendamment dudit élément (24) de commande dynamique ;
   ledit élément (24) de commande dynamique et ledit autre élément de commande (36) pouvant tourner autour d'un axe commun ;
   et des moyens d'étanchéité (42) réalisant un joint étanche entre le corps de valve (12) et l'ensemble constitué par lesdits éléments de commande (24, 36) ;
   caractérisé en ce que ledit autre élément de commande (36) est un élément de commande marche-arrêt (36) sur lequel est disposé l'élément (24) de commande dynamique et susceptible de tourner entre une première position ouverte et une deuxième position fermée, ledit élément de commande marche-arrêt (36) restant fixe, pour toutes les positions de l'élément (24) de commande dynamique sauf sa position fermée, dans la première position ouverte pour couvrir complètement les moyens d'étanchéité (42) et pour les protéger afin qu'ils ne soient pas frappés directement par un fluide s'écoulant à travers ledit passage interne d'écoulement de fluide (22).

2. Un ensemble de valve selon la revendication 1, caractérisé en ce qu'il comprend des éléments de support (70, 72, 74) situés entre lesdits éléments de commande dynamique et de commande marche-arrêt (24, 36).

3. Un ensemble de valve selon la revendication 2, caractérisé en ce que lesdits moyens d'étanchéité (42) et lesdits éléments de support (70, 72, 74) sont constitués d'un polymère d'hydrocarbure fluoré.

4. Un ensemble de valve selon la revendication 1, caractérisé en ce que ledit élément de commande marche-arrêt (36) est une vanne à boisseau rotative.

5. Un ensemble de valve selon la revendication 1, caractérisé en ce qu'il comprend des moyens (28) pour appliquer un couple audit élément (24) de commande dynamique pour effectuer le déplacement de celui-ci, et qu'il comprend de plus un moyen de commande de position (76, 78) pour indiquer la position angulaire relative de l'élément (24) de commande dynamique par rapport audit corps (12), lesdits moyens (76, 78) de commande de position étant désaccouplés mécaniquement desdits moyens d'application de couple (28).

6. Un ensemble de valve selon la revendication 5, caractérisé en ce qu'il comprend des moyens (46) pour appliquer un couple audit élément de commande marche-arrêt (36) pour en provoquer la rotation, lesdits moyens (46) d'application de couple dudit élément de commande marche-arrêt (36) étant positionnés sur le côté opposé du passage intérieur d'écoulement de fluide (22) par rapport au moyen (28) d'application de couple dudit élément (24) de commande dynamique.

7. Un ensemble de valve selon la revendication 6, caractérisé en ce que lesdits moyens d'application de couple (28) dudit élément (24) de commande dynamique et lesdits moyens d'application de couple (46) dudit élément de commande marche-arrêt (36) comprennent chacun un arbre d'actionnement rotatif (32, 50) s'étendant à travers un orifice d'accès (54, 56) dans ledit corps de valve (12) et des moyens d'ajustement pour assurer indépendamment l'étanchéité de l'orifice d'accès (54, 56) autour desdits arbres (32, 50).

**Ansprüche**

1. Absperrorgan mit:
   einem Gehäuse (12), das einen Einlaß (18), einen Außlaß (20) und einen sich zwischen diesen erstreckenden inneren Fluidströmungsdurchlaß (22) hat;
   einem dynamischen Fluidsteuerteil (24), das in das Gehäuse (12) drehbar eingepaßt ist und das zwischen offenen und geschlossenen Positionen bewegbar ist, um die Fluidströmung durch den inneren Strömungsdurchlaß (22) gemäß der Winkelposition des dynamischen Steuerteils (24) relativ zu dem Gehäuse (12) wahlweise zu steuern; und

einem weiteren Steuerteil (36), das in dem Gehäuse (12) angeordnet und in bezug auf das Gehäuse (12) unabhängig von dem dynamischen Steuerteil (24) wahlweise drehbar ist;
wobei das dynamische Steuerteil (24) und das weitere Steuerteil (36) um eine gemeinsame Achse drehbar sind, und
einer Dichteinrichtung (42), die eine Abdichtung zwischen dem Gehäuse (12) und der aus den Steuerteilen (24, 36) bestehenden Baugruppe herstellt;
dadurch gekennzeichnet, daß das weitere Steuerteil (36) ein Ein/Aus-Steuerteil (36) ist, in welchem das dynamische Steuerteil (24) angeordnet ist und welches zwischen einer ersten, offenen Position und einer zweiten, geschlossenen Position drehbar ist, wobei das Ein/Aus-Steuerteil (36) in allen Positionen mit Ausnahme der geschlossenen Position des dynamischen Steuerteils (24) in der ersten, offenen Position stationär bleibt, um die Dichteinrichtung (42) vollständig abzudecken und sie vor dem direkten Auftreffen eines durch den inneren Fluidströmungsdurchlaß (22) strömenden Fluids zu schützen.

2. Absperrorgan nach Anspruch 1, gekennzeichnet durch Lagerteile (70, 72, 74), die zwischen dem dynamischen und dem Ein/Aus-Steuerteil (24, 36) angeordnet sind.

3. Absperrorgan nach Anspruch 2, dadurch gekennzeichnet, daß die Dichteinrichtung (42) und die Lagerteile (70, 72, 74) aus einem fluorierten Kohlenwasserstoffpolymer gebildet sind.

4. Absperrorgan nach Anspruch 1, dadurch gekennzeichnet, daß das Ein/Aus-Steuerteil (36) ein drehbares Absperrteil ist.

5. Absperrorgan nach Anspruch 1, gekennzeichnet durch eine Einrichtung (28) zum Ausüben eines Drehmoments auf das dynamische Steuerteil (24), um dessen Bewegung hervorzurufen, und weiter durch eine Positionssteuereinrichtung (76, 78) zum Anzeigen der relativen Winkelposition des dynamischen Steuerteils (24) relativ zu dem Gehäuse (12), wobei die Positionssteuereinrichtung (76, 78) von der Drehmomentausübungseinrichtung (28) mechanisch entkoppelt ist.

6. Absperrorgan nach Anspruch 5, gekennzeichnet durch eine Einrichtung (46) zum Ausüben eines Drehmoments auf das Ein/Aus-Steuerteil (36) zum Bewirken der Drehung desselben, wobei die Drehmomentausübungseinrichtung (46) für das Ein/Aus-Steuerteil (36) in bezug auf die Drehmomentausübungseinrichtung (28) für das dynamische Steuerteil (24) auf der entgegengesetzten Seite des inneren Fluidströmungsdurchlasses (22) angeordnet ist.

7. Absperrorgan nach Anspruch 6, dadurch gekennzeichnet, daß die Drehmomentausübungseinrichtung (28) für das dynamische Steuerteil (24) und die Drehmomentausübungseinrichtung (46) für das Ein/Aus-Steuerteil (36) jeweils eine drehbare Betätigungswelle (32, 50), die sich durch eine Zugangsöffnung (54, 56) in dem Gehäuse (12) erstreckt, und eine einstellbare Einrichtung zum unabhängigen Abdichten der Zugangsöffnung (54, 56) um die Wellen (32, 50) aufweisen.

FIG. 1

FIG. 2

FIG. 3

FIG. 4

FIG. 5